# EUROPEAN PATENT APPLICATION

(11) **EP 4 498 328 A1**
(43) Date of publication of application: **29.01.2025**
(21) Application number: 23187350.6
(22) Date of filing: 24.07.2023
(51) Int. Cl.: G06V 10/24, G06V 20/52, G06V 40/20

(54) **CAMERA CONFIGURATION FOR MONITORING A REGION**

(71) Applicant: Koninklijke Philips N.V., 5656 AG Eindhoven (NL)
(72) Inventor: KIRENKO, Ihor Olehovych, Eindhoven (NL)
(74) Representative: Philips Intellectual Property & Standards

(57) **Abstract**

Proposed concepts aim to provide schemes, solutions, concepts, designs, methods, and systems pertaining to the detection of a position of a subject relative to a monitoring region. In particular, the monitoring region is delimited by a machine readable code in a plurality of locations around the monitoring region. The locations of said machine readable code in images from a camera are detected and used to determine a virtual boundary describing pixels of the camera corresponding to the monitoring region. Said virtual boundary can then be used to determine monitoring regions exits (or attempts to exit) by the camera. Accordingly, embodiments of the invention may provide a simple and robust method for initialising/configuring a camera detecting a position of a subject relative to the monitoring region.

## Description

### FIELD OF THE INVENTION

The present invention relates to the field of camera configuration, and more particularly to configuring a camera adapted to detect a position of a subject relative to a monitoring region.

### BACKGROUND OF THE INVENTION

Patient falls in hospitals is a growing problem for healthcare providers, since injuries acquired due to falls lead to longer length of stay, and additional expenses. Most falls occur due to attempts of patients to leave their beds without assistance. Therefore, detection of bed and/or chair exits (or attempts to exit) is proven to be an effective approach to reduce patient falls in hospital settings.

Camera-based detection of exits from a bed and/or a chair (or attempts to exit) has become a favoured mode of detection in recent years, due to a fast development of computer vision and price reduction of 2D/3D cameras. Such systems are mostly based on detection or prediction of instances of a patient (i.e., a subject) body (or part thereof) crossing a virtual boundary (e.g., a virtual bed rail). Virtual boundaries/borders can be either drawn/selected manually, or be detected automatically using algorithms for bed/chair border detection.

In the first case, manual selection of virtual boundaries requires extra effort from caregivers, as well as implementation of an interactive UI. Moreover, it is important that virtual boundaries are selected by caregivers on a video correctly. That is, if such boundaries are drawn inside the bed/chair, then there is a risk of false alarms. Alternatively, if such boundaries are drawn too far outside of the bed/chair area, then instances of an exit attempt and/or exits may be missed. Manual drawing of boundaries around a bed or a chair may be feasible where technical staff or a caregiver visually observe the video stream at a back-end central station. However, in cases where there is no real-time back end, then manual drawing of borders on a video stream at the back end is not feasible.

In case of an automated detection of a bed/chair border as a virtual boundary, the robustness and accuracy of the algorithm can vary significantly depending on a camera type, a bed/chair type, an occlusion of the bed/chair etc. For instance, a 3D camera may provide a detection of borders that is robust to occlusions or illumination conditions, but would require significant computation resources and expensive 3D camera hardware. Moreover, robustness and accuracy of automated detection of virtual boundaries depends on the shape of the bed/chair, their position relative to a camera, connections to surrounding objects, etc.

Therefore, there exists a need for an alternative means for initialization of a monitoring area around regions for patient exit detection. It is desirable for such a system to be reliable, simple to implement, be robust to various shapes of bed/chair and locations of surrounding objects, be computationally simple, be agnostic to camera type, and to not require a dedicated user interface and/or back end of a camera surveillance system.

### SUMMARY OF THE INVENTION

The invention is defined by the claims.

According to examples in accordance with an aspect of the invention, there is provided a method for configuring a camera adapted to detect a position of a subject relative to a monitoring region delimited by a machine readable code. The method comprises:
detecting a plurality of locations of the machine readable code in one or more images of the monitoring region from the camera, the plurality of locations corresponding to at least two edges of the monitoring region; and
determining a virtual boundary describing pixels of the camera corresponding to the monitoring region, the virtual boundary based on the detected locations of the machine readable code.

The invention is based on the realisation that machine readable codes (e.g., QR codes, static color code, etc.) can be utilised to robustly delimit a monitoring region in a manner simple to detect by a standard camera system. That is, rather than relying on automated detection of boundaries of a monitoring zone (e.g., edge of a bed, an area around a chair), a machine readable code may be placed on two edges to ensure accuracy and reliability of the virtual boundary detection. Moreover, the automatic nature of the machine readable code detection means that manual drawing/selection of the virtual boundary is not required. This means that time for technical personnel is saved, there is no need to a complicated user interface to facilitate drawing/selection, and a reduction in the possibility of human error.

In aiming to establish a virtual boundary by which (attempts of) exits from a monitoring region may be detected (e.g., detecting when a patient attempts to leave a chair or bed), a machine readable code can be used to delimit the monitoring region. The locations of the machine readable code may be simply to detect/determine in images from a camera, and thus the virtual boundary reliably determined in a simple manner.

Moreover, it is typically computationally inexpensive to detect machine readable codes in images from a camera. This is especially true when compared to the computational expense required to determine a virtual boundary of a monitoring area simply using image recognition techniques, with such techniques also being prone to costly errors - especially in occluded or low lighting conditions. While 3D cameras offer the potential to improve the reliability of such techniques, they are also expensive and require much higher computational power and memory to interpret. A user may be able to manually delimit a virtual boundary, but this does not negate the chance of error (especially if such a user is untrained or is rushed), and also requires a complicated user interface in order to effectively implement. Accordingly, machine readable codes provide a solution overcoming issues with the above existing solutions.

In some embodiments, the method may comprise a preceding step of positioning the machine readable code at locations corresponding to the at least two edges of the monitoring region.

Positioning the machine readable code allows a user to select a virtual boundary that suits the user. That is, the user is able to position the machine readable code (rather than having the machine readable fixed to edges of the monitoring region), thus establishing their own desired virtual boundary. This improves adaptability of the method to a variety of different scenarios.

Furthermore, the method may also comprise preceding steps of generating the machine readable code, and displaying the machine readable code on a portable device.

Accordingly, an ease of configuring the camera is improved. By generating the machine readable code and providing it to a portable device (e.g., a smartphone, a tablet), a user may easily provide the machine readable code in positions corresponding to edges of the monitoring region. This will ensure accurate configuration of the virtual boundary, whilst also being straightforward for an untrained or rushed user to perform.

In some embodiments, determining the virtual boundary may comprise measuring an image size of the machine readable code in the one or more images at the plurality of locations. Determining the virtual boundary may also comprise determining a distance between the locations of the machine readable code on each edge based on a comparison between the image size of the machine readable code on each edge. Thus, determining the virtual boundary may be further based on the distance between the locations of the machine readable code.

One method of accurately and reliably determining the virtual boundary is by determining a size of the machine readable code in the image(s) (and therefore a distance from the camera). Combining that information with a lateral distance between the machine readable codes in the image may result in a measurement of the resulting physical distance. The distance can be used to determine the size of the virtual boundary.

Also, the method may comprise receiving, from a user, a target shape of the virtual boundary. In this case, determining the virtual boundary may be further based on the target shape.

A user selectable shape enables adaptability of the virtual boundary to accurately conform to the monitoring region.

In some embodiments, the method may further comprise determining, from the machine readable code, a subject identifier defining a subject associated with the monitoring region, and associating the subject to the monitoring region.

Advantageously, the machine readable code may also enable registration of individuals to the monitoring region. Indeed, it may be that multiple individuals enter/exit the monitoring region, but detection of (attempt of) exits may only be desired for certain subjects. Thus, this embodiment enables a detection system that is adaptive and only determines the relative location for a subject associated with the monitoring region.

The monitoring region may comprise a plurality of separate sub-regions. In this case, the method may further comprise determining, for each sub-region, a sub-virtual boundary delimiting pixels of the camera corresponding to the sub-region, the sub-virtual boundary based on the detected locations of the machine readable code.

It may also be the case that there are multiple different monitoring regions. For example, the field of view of the camera may include a bed and a chair. It may be desirable to determine a location of the subject to both of these monitoring regions. Accordingly, the machine readable code may be positioned at edges of each of these regions to provide multiple virtual boundaries.

In some embodiments, the method may further comprise storing the one or more images, and receiving a subsequent image from the camera. Further, the method may comprise detecting a camera and/or monitoring region movement value based on a comparison between the one or more stored images and the subsequent image, and outputting a signal prompting a reconfiguration responsive to the subsequent change meeting a predetermined condition.

In this way, the need to reconfiguration may be automatically detected (e.g., when the camera and/or monitoring region is moved). This may ensure that the detection of the relative positioning of the subject and monitoring region is always accurate. This may also save time of users who need to check to ensure that the relative positioning of the subject and monitoring region is still being accurately determined.

The machine readable code may be a QR code, a static color code, or a temporal code having a changing color and/or graphical pattern.

Further, the monitoring region may correspond to an area in which the subject sits and/or lies, and the virtual boundary corresponds to an area in which the subject begins to stand up. Optionally, the monitoring region may correspond to at least one of a subject bed, subject chair, and subject sofa.

Indeed, the invention may be particularly beneficial in the field of fall detection, particularly for those who are moving from a sitting down or prone position to a standing position, where instances of falling is high. It is beneficial to detect (attempts to) exits of such monitoring regions, so that other individuals may be prompted to ensure they are alert to such occasions.

According to examples in accordance with additional aspects of the invention there is provided a method for detecting movement of a subject outside of a monitoring region using a camera. The method comprises configuring the camera according to any of the above described embodiments, receiving an image from the camera, processing the image based on the virtual boundary to determine the presence of at least part of the subject outside of the monitoring region, and outputting a motion alert signal indicating movement of the subject across the virtual boundary responsive to determining the presence of at least part of the subject outside of the monitoring region.

According to examples in accordance with another aspect of the invention there is provided a computer program comprising computer program code means adapted, when said computer program is run on a computer, to implement any of the methods described above.

Also, according to examples in accordance with another aspect of the invention there is provided a system for configuring a camera adapted to detect a position of a subject relative to a monitoring region delimited by a machine readable code.

The system comprises an image recognition unit configured to detect a plurality of locations of a machine readable code in the one or more images, the plurality of locations corresponding to at least two edges of the monitoring region; and
a segmentation unit configured to determine a virtual boundary delimiting pixels of the camera corresponding to the monitoring region, the virtual boundary based on the detected locations of the machine readable code.

In some embodiments, the system may further comprise a code generator configured to generate the machine readable code, and a portable device configured to display the machine readable code.

Finally, according to examples in accordance with other aspects of the invention there is provided a monitoring apparatus, comprising a camera adapted to detect a position of a subject relative to a monitoring region, and configured to generate images including the monitoring region; and the system for configuring a camera as described above.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 depicts a simplified scenario of a monitoring region and a virtual boundary;
Fig. 2 depicts an alternative scenario of a monitoring region and a virtual boundary;
Fig. 3 presents a flow diagram of a method for configuring a camera adapted to detect a position of a subject relative to a monitoring region according to an embodiment of the invention;
Fig. 4 presents a flow diagram of a method for detecting movement of a subject outside of a monitoring region using a camera according to an aspect of another embodiment of the invention;
Fig. 5 is a simplified block diagram of a system for configuring a camera adapted to detect a position of a subject relative to a monitoring region according to a further embodiment of the invention; and
Fig. 6 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

It should be understood that the Figures are merely schematic and are not drawn to scale. It should also be understood that the same reference numerals are used throughout the Figures to indicate the same or similar parts.

Proposed concepts aim to provide schemes, solutions, concepts, designs, methods, and systems pertaining to the detection of a position of a subject relative to a monitoring region. In particular, the monitoring region is delimited by a machine readable code in a plurality of locations around the monitoring region. The locations of said machine readable code in images from a camera are detected and used to determine a virtual boundary describing pixels of the camera corresponding to the monitoring region. Said virtual boundary can then be used to determine monitoring regions exits (or attempts to exit) by the camera. Accordingly, embodiments of the invention may provide a simple and robust method for initialising/configuring a camera detecting a position of a subject relative to the monitoring region.

There is proposed a concept for definition and initialization of virtual boundaries (e.g., virtual bed borders), required for monitoring region exit detection. Embodiments of the concept use unique machine readable codes displayed on a portable device (e.g., a mobile device of a caregiver) to indicate the locations of borders of monitoring region(s) (e.g., corners of a bed). The machine readable code is visible to a camera-based surveillance/monitoring system, which defines virtual boundaries, such as virtual bad/chair rails, based on locations of the code. In this way, the initialization of monitoring region may be achieved in a simple manner, but still robustly and semi-automatically.

Embodiments of the invention combine advantages of fully manual and fully automated approaches for initialization of virtual boundaries of the monitoring region. A machine readable code (2D static QR code, color pattern, or a temporal color code) is used, for example on a portable device, visible to a surveillance camera to mark edges, corners, or extreme points of the virtual boundary of a monitoring area. Thus, instead of drawing virtual boundaries or an exact sensing area around a chair/bed on a surveillance video stream from the camera at a back end of the system using an interactive UI, a user may position the machine readable code (on a mobile phone) on edges or corners of the target monitoring region in areas visible to the camera. It is then possible to detect/recognize the machine readable codes in one or more images from the camera, thereby defining a virtual boundary of the monitoring area in subsequent images/video steam of the camera, by connecting the locations indicated by the machine readable code.

In this way, sensing areas around any object (e.g., a bed, chair, sofa) can be initialized, in a simple manner, independently on the shape of the object, the illumination conditions, surrounding objects, etc. This approach also enables to selection of several objects (e.g., beds, chairs, sofas, etc) within the same field of view, thereby defining multiple monitoring regions. Moreover, the machine readable code used for initialization of the virtual boundary can also contain information about a subject/patient. Thus, the proposed invention may also enable the assignment of monitoring regions to a corresponding patient.

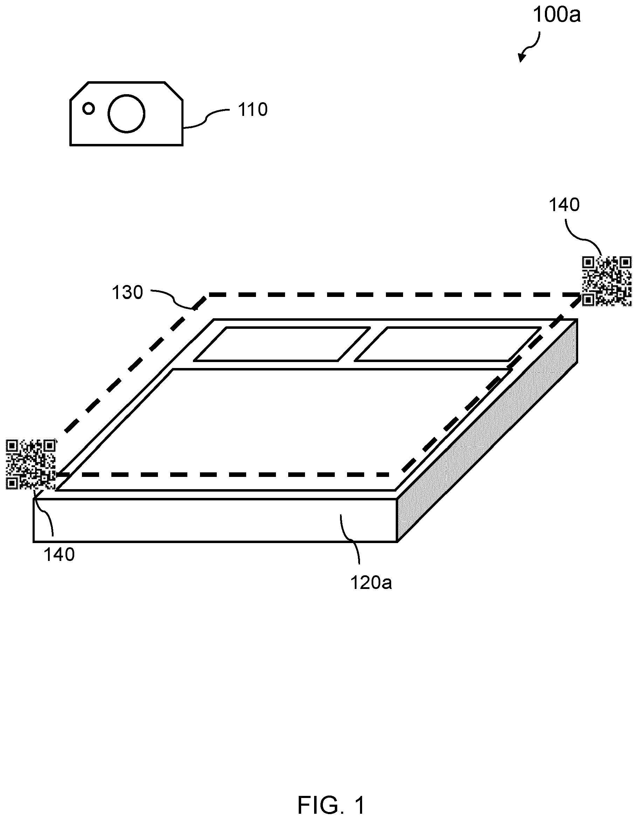

Fig. 1 presents a scenario of involving initialization of a monitoring region 120a and a virtual boundary 130. Specifically, virtual bed rails 130 around a patient bed 120a can be initialized in a semi-automatic way, by using a machine readable code 140 displayed on a screen of a mobile phone for example, and visible to a camera 110. The machine readable code 140 is positioned on at least two edges of the patient bed 120a, and preferably at the corners of the bed 120a (e.g. on a head and foot side of the bed 120a). As a result, the camera 110 can detect a position of the machine readable codes 140, register the codes 140, and assign them to corners of a virtual boundary 130 around the bed 120a. After that, it is possible to define a rectangle area around the bed 120a as a virtual boundary 130 by connecting the registered locations of the machine readable code 140 at corners of the bed 120a.

The main steps of the process of initialization of the virtual boundary according to embodiments of the invention are the following:
(i) A user (e.g., a caregiver) has a portable device, which displays a machine readable code recognizable by camera system. The machine readable code could be a 2D QR code, a static color code, or a temporal code of a changing color or graphical pattern;
(ii) The user positions/places the portable device near an edge or corner of the monitoring region. They may then press a button to cause the portable device to display the machine readable code visible to the camera;
(iii) The location of the machine readable code in images (i.e., a video stream) from the camera is detected. Pixels in the image(s) around the machine readable code may be defined as the edge or corner of the monitoring region;
(iv) The user repeats the process for (at least) a second edge and/or corner of the monitoring region, preferably on an opposite edge;
(v) The location of the machine readable code in images from the camera is detected again for the second location;
(vi) A distance between the location of the machine readable code is estimated/calculated based on the sizes of the machine readable code, in order to define a shape of the monitoring region and the virtual boundary.

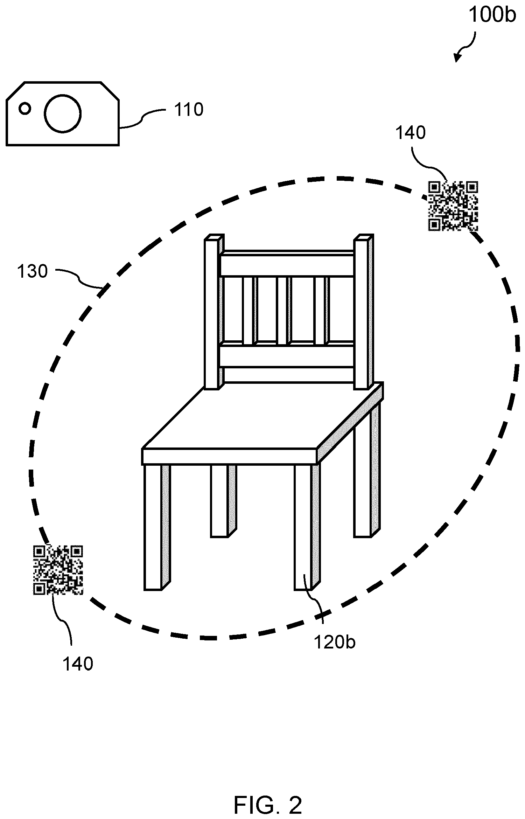

A further scenario of initialization of a monitoring region 120b and a virtual boundary 130 is presented in Fig. 2. The selection of various shapes of the virtual boundary 130 is enabled, in this case a circle. This may be implemented in the form of a basic user interface (such as a mobile app, perhaps implemented in the same portable device as the machine readable code 140 may be displayed). Various shapes of the monitoring region 120b and/or the virtual boundary 230 (not only rectangular virtual bed rails). For instance, in case there is a need to detect (and potentially prevent) unassisted leaving of a chair by a subject, the virtual boundary 130 should be selected around the chair. In this case a user may select the shape of the virtual boundary 130 around the monitoring region 120b, and mark the edges or extreme points of this area using the machine readable code 140.

Moreover, the machine readable code may be generated such that added functionality is embedded. For instance, the machine readable code may contain an identifier of the subject or other user. In this case, the assignment of the subject to the monitoring region can be achieved easily and automatically performed.

In yet another embodiment of the invention, an image object or pixel values around the machine readable code may be stored. Once the image object or pixel values change (indicating a movement of the camera or the monitoring region), a request to check or re-configure the virtual boundary may be generated and presented to a user.

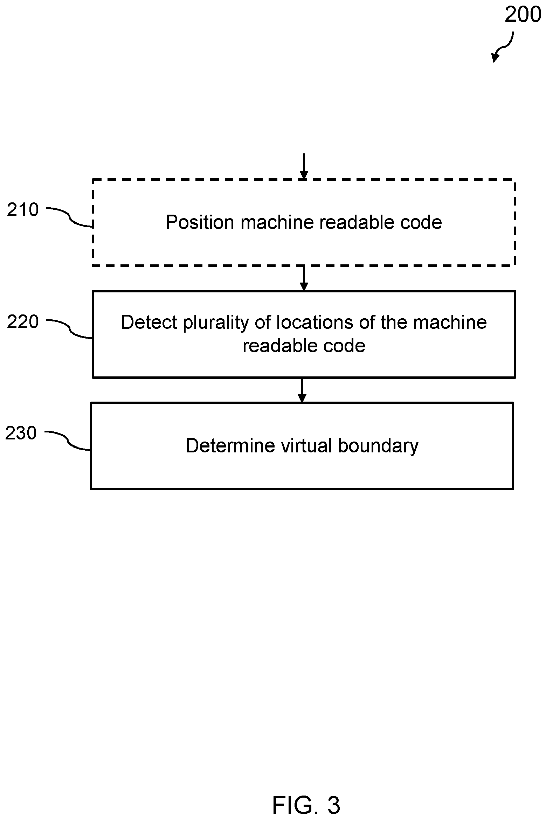

Moving on, Fig. 3 presents a flow diagram of a method for configuring a camera adapted to detect a position of a subject relative to a monitoring region according to an embodiment of the invention.

The monitoring region may correspond to an area in which the subject sits and/or lies. In this way, the monitoring region may correspond to at least one of a subject bed, subject chair, and subject sofa. Accordingly, the method may be effectively applied in a healthcare and/or eldercare environment where subject falls often occur as the subject attempts to leave such an area unassisted.

The camera is configured to establish a virtual boundary (i.e., border) delimiting/describing/defining an area within images produced by the camera corresponding to the monitoring region and an area within the images outside of said monitoring region. Thus, it may be simple to detect when the subject transitions (or begins to transition) from the monitoring region to outside the monitoring region.

In the above example, this means that the virtual boundary corresponds to an area in which the subject begins to stand up or move from a laying down/sitting position to a standing up position.

Initially, in optional step 210, a machine readable code (e.g., a QR code, a static color code, or a temporal code having a changing color and/or graphical pattern) is positioned at locations corresponding to the at least two edges of the monitoring region. That is, a user may position the machine readable code in a number of distinct locations around their desired/target monitoring region, thereby indicating where they wish for the virtual boundary to be placed.

Alternatively, the machine readable code may already be provided in the at least two edges of the monitoring region. For example, the machine readable code may be provided on a frame of a bed corresponding to the monitoring region, or arms of a chair corresponding to the monitoring region.

In any case, the machine readable code is positioned to delimit the monitoring region. In this way, positions of the machine readable code correspond to edges of the monitoring region, and are therefore associated with the desired virtual boundary.

The machine readable code may be the same in each of the locations, or may be altered to be different in each of the locations. That is, a first machine readable code may be provided in a first location, and a second machine readable code may be provided in a second location.

In some embodiments, the method may further comprise generating the machine readable code. In other words, a machine readable code is created that can be detected by a camera. Then, the machine readable code is displayed on a portable device (e.g., a smartphone, tablet, etc.). Accordingly, the portable device may be positioned in the plurality of locations corresponding to the at least two edges of the monitoring region, with the display of the portable device visible to the camera.

In step 220, a plurality of locations of the machine readable code is detected in one or more images of the monitoring region from the camera. Indeed, the machine readable code(s) may be positioned in each of the locations at the same time (i.e., different machine readable codes or duplicated machine readable code provided in the plurality of locations at the same time) and so will be visible in a single image, or may be moved between the locations over time, and therefore will require multiple images. The positions/locations may be determined in the image(s) using simple image recognition techniques well known to the skilled person.

The plurality of locations corresponding to at least two edges of the monitoring region. That is, the position of one machine readable code may not allow for accurate and robust determination of the monitoring region and therefor the virtual boundary. However, if provided on two edges (preferably corners), with a known or inferred shape, a virtual boundary can be accurately determined.

Of course, if the machine readable code is provided in more locations (and preferably corners of the monitoring region), an accuracy of determination of the virtual boundary may be improved.

In step 230, a virtual boundary describing pixels of the camera corresponding to the monitoring region is determined. The virtual boundary is based on the detected locations of the machine readable code.

One way in which step 230 may be implemented is to first measure an image size of the machine readable code in the one or more images at the plurality of locations. From the image size, a distance between the locations of the machine readable code on each edge may be determined by comparing the image sizes of the machine readable code on each edge. Thus, in this case, determining the virtual boundary is further based on the distance between the locations of the machine readable code.

Furthermore, step 230 may also comprise receiving, from a user (e.g., a caregiver), a target shape of the virtual boundary. The target shape may be a desired shape of the virtual boundary delimiting the monitoring region. For example, it may be assumed that a rectangular monitoring region is standard, but a user may choose a circle instead in certain scenarios. Accordingly, determining the virtual boundary is further based on the target shape in combination with the detected locations.

Moreover, in some embodiments, a subject identifier may be determined from the machine readable code, which defines a subject associated with the monitoring region. The monitoring region may then be associated/registered to the subject - such that the relative location of the subject to the monitoring region is tracked.

In some cases, the monitoring region comprises a plurality of separate sub-regions. For example, there may be a bed and a chair within the field of view of the camera, and it may be desirable to track exit events for both regions. In this case, a sub-virtual boundary is determined for each sub-region, the sub-virtual boundary delimiting pixels of the camera corresponding to the sub-region.

Finally, as one added feature, the method may allow for the automatic detection of the movement of the monitoring region (and therefore the need to reinitialise/configure the camera for the changed virtual boundary. To implement this, firstly (at least part corresponding to the location of the machine readable code) the one or more images are stored. Then, a subsequent image is received from the camera. For example, the subsequent image may be an image received during the normal surveillance/monitoring of the monitoring region.

A camera and/or monitoring region movement value can then be determined, based on a comparison between the one or more stored images and the subsequent image. That is, differences in the images may indicate a movement of the camera or monitoring region, with significant differences indicative of a probable movement. A signal prompting a reconfiguration responsive to the subsequent change meeting a predetermined condition may then be generated. The predetermined condition may be a minimum difference (e.g., a minimum number of pixel changes) between the images.

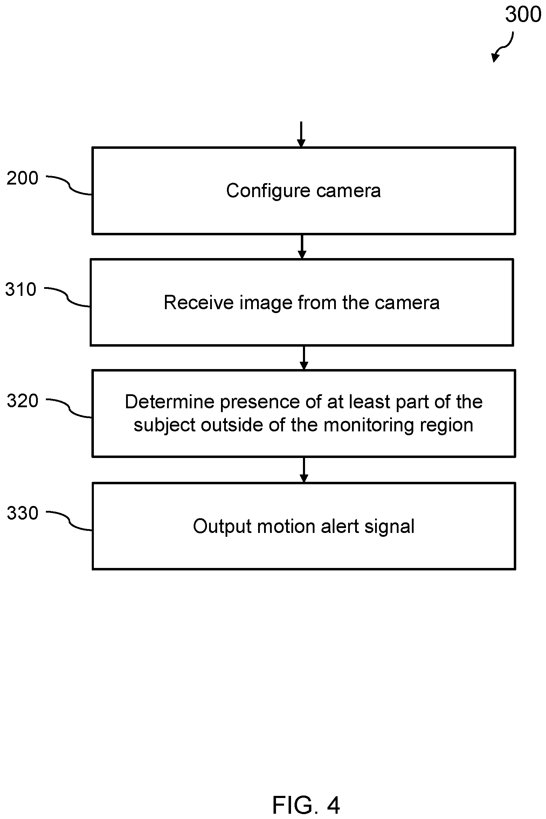

Fig. 4 presents a flow diagram of a method for detecting movement of a subject outside of a monitoring region using a camera. That is, Fig. 4 presents a method of determining whether a subject has moved across a virtual boundary delimiting a monitoring region. In some cases, this may be implemented to detect when a subject exits a bed and/or seat, or attempts to exit a bed and/or seat.

In step 200, the camera is configured according to a method described in reference to Fig. 3. For sake of brevity, repeated description of such configuration/initialisation of the camera is omitted.

In step 310, an image is received from the camera. The image is of the monitoring region. The image may be part of a video stream recorded by the camera. The image may be obtained from a memory of the camera.

In step 320, the image is processed based on the virtual boundary (determined in step 200) to determine the presence of at least part of the subject outside of the monitoring region. That is, the image is analysed to detect any part of the subject in the image corresponding to pixels outside of the monitoring region according to the virtual boundary.

Responsive to determining the presence of at least part of the subject outside of the monitoring region, in step 330 a motion alert signal is output. The motion alert signal indicates movement of the subject across the virtual boundary. In this way, a user may be alerted to potential movement of the subject across the virtual boundary, and therefore movement outside of the monitoring region.

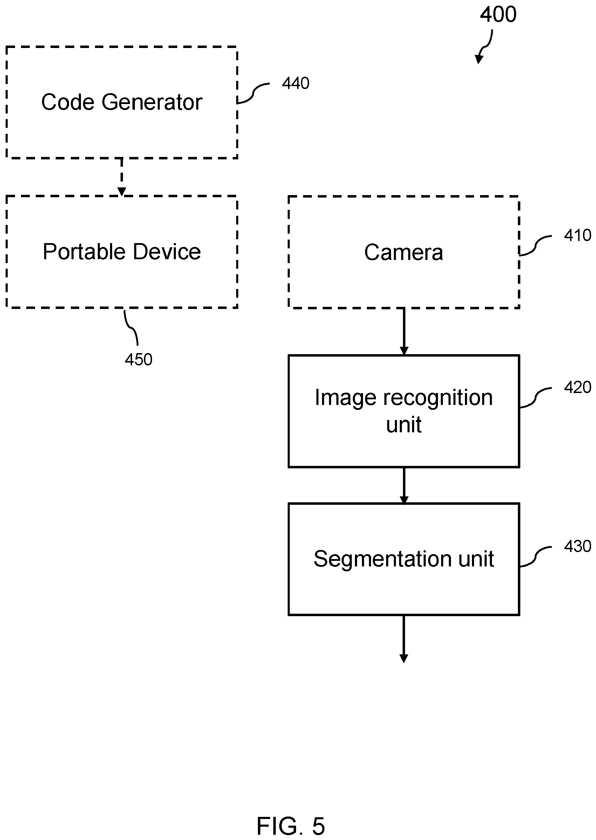

Fig. 5 is a simplified block diagram of a system 400 for configuring a camera 410 adapted to detect a position of a subject relative to a monitoring region delimited by a machine readable code. The system 400 comprises an image recognition unit 420 and a segmentation unit 430. In further optional embodiments, the system 400 further comprises the camera 410, a code generator 440 and/or a portable device 450.

The image recognition unit 420 is configured to detect a plurality of locations of a machine readable code in the one or more images. As above, the plurality of locations corresponding to at least two edges of the monitoring region. The image recognition unit 420 may employ any image recognition algorithms suitable for detecting a machine readable code in an image.

The segmentation unit 430 is configured to determine a virtual boundary delimiting pixels of the camera corresponding to the monitoring region. The segmentation unit determines the virtual boundary based on the detected locations of the machine readable code.

Furthermore, the system 400 may further comprise a code generator 440 configured to generate the machine readable code, and a portable device 450 configured to display the machine readable code.

Of course, the system may 400 also comprise the camera 410 generating the one or more images. The camera 410 may also be adapted to detect a position of a subject relative to a monitoring region, and configured to generate images of the monitoring region.

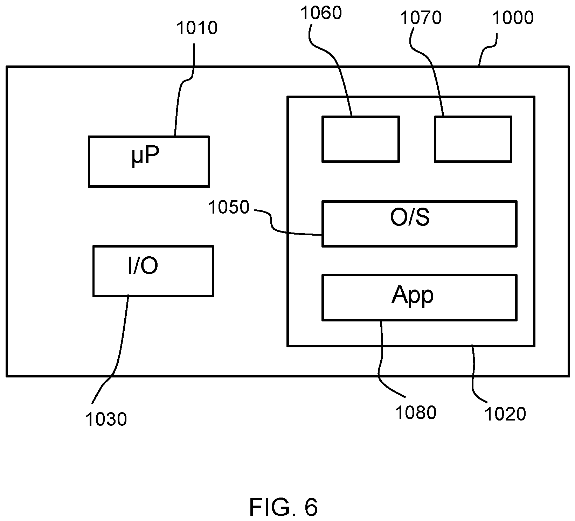

Fig. 6 illustrates an example of a computer 1000 within which one or more parts of an embodiment may be employed. Various operations discussed above may utilize the capabilities of the computer 1000. For example, one or more parts of a system for acquiring an input from a user to control an interface may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, smart phones, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor-based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, functional programming and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods described in relation to Figures 3 and 4, and the system described in relation to Fig. 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagram in Fig. 5 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for configuring a camera adapted to detect a position of a subject relative to a monitoring region delimited by a machine readable code, the method comprising:
detecting (220) a plurality of locations of the machine readable code in one or more images of the monitoring region from the camera, the plurality of locations corresponding to at least two edges of the monitoring region; and
determining (230) a virtual boundary describing pixels of the camera corresponding to the monitoring region, the virtual boundary based on the detected locations of the machine readable code.

2. The method of claim 1, comprising a preceding step of positioning (210) the machine readable code at locations corresponding to the at least two edges of the monitoring region.

3. The method of claim 1 or 2, comprising preceding steps of:
generating the machine readable code; and
displaying the machine readable code on a portable device.

4. The method of any of claims 1-3, wherein determining (230) the virtual boundary comprises:
measuring an image size of the machine readable code in the one or more images at the plurality of locations;
determining a distance between the locations of the machine readable code on each edge based on a comparison between the image size of the machine readable code on each edge, wherein determining the virtual boundary is further based on the distance between the locations of the machine readable code.

5. The method of any of claims 1-4, further comprising receiving, from a user, a target shape of the virtual boundary, wherein determining (230) the virtual boundary is further based on the target shape.

6. The method of any of claims 1-5, further comprising
determining, from the machine readable code, a subject identifier defining a subject associated with the monitoring region; and
associating the subject to the monitoring region.

7. The method of any of claims 1-6, wherein the monitoring region comprises a plurality of separate sub-regions, and wherein the method comprises:
determining, for each sub-region, a sub-virtual boundary delimiting pixels of the camera corresponding to the sub-region, the sub-virtual boundary based on the detected locations of the machine readable code.

8. The method of any of claims 1-7, further comprising:
storing the one or more images;
receiving a subsequent image from the camera;
detecting a camera and/or monitoring region movement value based on a comparison between the one or more stored images and the subsequent image; and
outputting a signal prompting a reconfiguration responsive to the subsequent change meeting a predetermined condition.

9. The method of any of claims 1-8, wherein the machine readable code is a QR code, a static color code, or a temporal code having a changing color and/or graphical pattern.

10. The method of any of claims 1-9, wherein the monitoring region corresponds to an area in which the subject sits and/or lies, and the virtual boundary corresponds to an area in which the subject begins to stand up, and optionally wherein the monitoring region corresponds to at least one of a subject bed, subject chair, and subject sofa.

11. A method for detecting movement of a subject outside of a monitoring region using a camera, the method comprising:
configuring (200) the camera according to any of claims 1-10;
receiving (310) an image from the camera;
processing (320) the image based on the virtual boundary to determine the presence of at least part of the subject outside of the monitoring region;
outputting (330) a motion alert signal indicating movement of the subject across the virtual boundary responsive to determining the presence of at least part of the subject outside of the monitoring region.

12. A computer program comprising computer program code means adapted, when said computer program is run on a computer, to implement the method of any of claims 1-11.

13. A system (400) for configuring a camera (410) adapted to detect a position of a subject relative to a monitoring region delimited by a machine readable code, comprising:
an image recognition unit (420) configured to detect a plurality of locations of a machine readable code in the one or more images, the plurality of locations corresponding to at least two edges of the monitoring region;
a segmentation unit (430) configured to determine a virtual boundary delimiting pixels of the camera corresponding to the monitoring region, the virtual boundary based on the detected locations of the machine readable code.

14. The system of claim 13, further comprising
a code generator (440) configured to generate the machine readable code;
a portable device (450) configured to display the machine readable code.

15. A monitoring apparatus, comprising:
a camera (410) adapted to detect a position of a subject relative to a monitoring region, and configured to generate images including the monitoring region; and
the system of claim 13 or 14.
